# FASCICULE DE BREVET EUROPEEN

(11) **EP 4 532 967 B1**
(45) Date de publication et mention de la délivrance du brevet: **13.08.2025**
(21) Numéro de dépôt: 23730388.8
(22) Date de dépôt: 26.05.2023
(51) Int. Cl.: F16L 15/00, E21B 17/042, E21B 17/08, F16L 47/16

(54) **COMPOSANT TUBULAIRE COMPORTANT UN ÉLÉMENT DE CONNEXION FILETÉ**
ROHRFÖRMIGES BAUTEIL MIT EINEM GEWINDEANSCHLUSSELEMENT
TUBULAR COMPONENT HAVING A THREADED CONNECTION ELEMENT

(30) Priorité: 31.05.2022 FR 2205219
(43) Date de publication de la demande: 09.04.2025
(73) Titulaire: Vallourec Oil and Gas France, 59620 Aulnoye-Aymeries (FR)
(72) Inventeur: VERGER, Eric, 92190 Meudon (FR)
(74) Mandataire: Mbacke, Mactar
(86) Numéro de dépôt international: PCT/EP2023/064252
(87) Numéro de publication internationale: WO 2023/232707

(56) Documents cités:
- GB-A- 2 038 977
- US-A- 5 895 079
- US-B1- 6 863 313

## Description

### Domaine technique

L'invention se rapporte au domaine des composants tubulaires et notamment des composants tubulaires destinés à être assemblés les uns aux autres pour être descendus dans les puits de gaz ou de pétrole pour constituer une garniture de forage, une colonne de tube de cuvelage ou de tubage ou encore une colonne de tube de production.

Un composant tubulaire comporte au moins un élément de connexion fileté, cet élément de connexion fileté étant destiné à coopérer avec l'élément de connexion fileté d'un deuxième composant tubulaire afin d'assembler ces deux composants tubulaires ensemble pour constituer un joint fileté tubulaire. Le composant tubulaire peut être par exemple un tube de grande dimension (par exemple d'environ dix mètres de longueur), un manchon tubulaire (par exemple de quelques dizaines de centimètres de longueur), ou un accessoire de ces tubes (dispositif de suspension, pièce de changement de section, vanne de sécurité, connecteur pour tige de forage, etc.).

### Arrière-plan technologique

Les composants tubulaires composites peuvent être créés par diverses méthodes de fabrication, et notamment une technique connue sous le nom d'enroulement filamentaire dans laquelle une fibre imprégnée de résine est enroulée en hélice autour d'un mandrin, et le composant tubulaire composite résulte de la couverture du mandrin par le matériau composite formé par la fibre imprégnée de résine.

Par rapport aux composants tubulaires en métal tel que l'acier, les composants tubulaires composites sont considérablement plus légers. En outre, les composants tubulaires composites ne se corrodent pas ce qui est avantageux par exemple dans les applications sous-marines.

Il est connu d'usiner les extrémités des composants tubulaires afin de former des filetages permettant de raccorder les composants tubulaires les uns aux autres. Toutefois, les raccords filetés dans le matériau composite ne conviennent pas aux applications impliquant des charges élevées

En effet, un inconvénient des composants tubulaires composites par rapport aux composants tubulaires conventionnels en métal est que l'introduction de contraintes dans les extrémités des composants tubulaires composites peut être problématique, en particulier lorsque la contrainte est élevée. Idéalement, la connexion aux extrémités du composant tubulaire composite devrait être au moins aussi solide que le corps du composant tubulaire.

Il est connu du document US 9,470,350 B2 des composants tubulaires réalisés en matériau composite comportant un corps principal en matériau composite associé à des raccords d'extrémité métalliques permettant de raccorder des composants tubulaires entre eux. Toutefois, comme indiqué dans ce document, un tel assemblage est complexe et présente une faiblesse notamment à l'interface composite/métal. Il est également connu le document US 5,895,079 portant sur une connexion filetée utilisant des matériaux composites.

### Résumé

Une idée à la base de l'invention est de fournir un composant tubulaire léger et présentant une bonne résistance mécanique aux contraintes. En particulier, une idée à la base de l'invention est de fournir un composant tubulaire composite comportant un connecteur métallique et présentant une résistance satisfaisante au niveau de l'interface composite/métal.

Selon un mode de réalisation, l'invention fournit un composant tubulaire pour joint fileté tubulaire, ledit compostant tubulaire comportant un corps principal et un élément de connexion fileté, ledit élément de connexion fileté s'étendant axialement depuis le corps principal jusqu'à une extrémité libre du composant tubulaire, l'élément de connexion fileté comportant un filetage hélicoïdal,
dans lequel le composant tubulaire comporte une portion métallique et une portion en matériau composite,
et dans lequel la portion métallique forme l'extrémité libre du composant tubulaire, le filetage hélicoïdal comportant une première portion filetée et une deuxième portion filetée, la portion métallique comportant la première portion filetée, la portion en matériau composite comportant la deuxième portion filetée, la portion de matériau composite étant en contact radial avec la portion métallique au droit de la deuxième portion filetée.

Grâce à ces caractéristiques, le composant tubulaire présente un poids et une résistance satisfaisants.

La portion métallique procure une résistance aux contraintes importante au niveau du filetage hélicoïdal.

Le fait qu'une portion du filetage, en l'occurrence la deuxième portion filetée, soit formée par la portion en matériau composite permet de maximiser la partie du composant tubulaire réalisée en matériau composite, permettant de minimiser le poids du composant tubulaire tout en conservant un bon comportement mécanique du fait de la première portion filetée formée par la portion métallique.

Le contact radial entre la portion en matériau composite et la portion métallique au droit de la deuxième portion filetée permet d'agencer radialement une zone de liaison entre la portion métallique et la portion en matériau composite entre la portion métallique et ladite deuxième portion filetée. Ainsi, lorsque le composant tubulaire est dans un état monté avec un deuxième composant tubulaire fileté, ladite zone de liaison entre la portion métallique et la portion en matériau composite est radialement coincée entre une portion du deuxième composant tubulaire coopérant avec la deuxième portion filetée et la portion métallique. La zone liaison entre la portion métallique et la portion en matériau composite est ainsi maintenue mécaniquement stable et fiable face aux contraintes en étant coincée entre le deuxième composant tubulaire et la portion métallique.

Dans un état monté, le composant tubulaire est associé à un deuxième composant tubulaire par coopération entre l'élément de connexion fileté du composant tubulaire et un deuxième élément de connexion fileté, ledit deuxième élément de connexion fileté état formé sur le deuxième composant tubulaire. Typiquement, dans un tel état monté, le filetage hélicoïdal du composant tubulaire est vissé avec un deuxième filetage hélicoïdal, ledit deuxième filetage hélicoïdal étant formé par le deuxième élément de connexion fileté.

Un élément s'étendant axialement présente une composante axiale, c'est-à-dire selon un axe longitudinal du composant tubulaire. Ainsi, l'élément de connexion fileté s'étendant axialement depuis le corps principal jusqu'à une extrémité libre du composant tubulaire se développe le long de l'axe longitudinal du composant tubulaire entre le corps principal et l'extrémité libre du composant tubulaire.

Le terme « matériau composite » désigne un matériau réalisé par la combinaison d'une matrice et de fibres de renforcement s'étendant dans la matrice. Ce terme inclut tout matériau plastique renforcé par des fibres. La matrice peut être réalisé par tout matériau liant approprié, y compris des résines thermodurcissables telles que des résines époxy ou polyester, ou encore certaines matières thermoplastiques. Les fibres de renforcement peuvent comprendre un ou plusieurs éléments parmi, par exemple, les fibres de verre, les fibres de carbone, les fibres de bore, les fibres de polyéthylène, les fibres de polypropylène, les fibres de polyamide, les fibres d'alumine et d'autres fibres synthétiques et organiques. Un tel matériau composite se présente sous la forme d'une bobine de matériau composite comportant un fil de fibres continu imprégné de résine. Ce fil de fibres continu est par exemple réalisé par tressage, filage, tissage ou tout autre méthode permettant d'obtenir une bobine de fibres pouvant être imprégnée de résine. De telles bobines peuvent également être formée à partir de fibres pré-imprégnées.

Le terme « dent » permet d'illustrer schématiquement une section longitudinale du filetage, une dent désignant un tour de filet complet de 360° autour de l'axe de révolution du filetage.

Selon des modes de réalisation, un tel composant tubulaire peut comporter une ou plusieurs des caractéristiques suivantes.

Selon un mode de réalisation, la portion métallique présente une première surface de liaison, la portion en matériau composite présente une deuxième surface de liaison, la première surface de liaison et la deuxième surface de liaison étant en contact et formant conjointement une zone de jonction entre la portion métallique et la portion en matériau composite, ladite zone de jonction présentant une composante radiale et une composante axiale.

Grâce à ces caractéristiques, la liaison entre la portion métallique et la portion en matériau composite est réalisée selon une surface de contact importante, ladite liaison s'étendant à la fois radialement et axialement.

La zone de jonction entre la portion métallique et la portion en matériau composite peut prendre de nombreuses configurations différentes. Selon un mode de réalisation, la zone de jonction est plane et inclinée par rapport à l'axe longitudinal du composant tubulaire. Autrement dit, la portion métallique comporte une première portion tronconique formant la première surface de liaison, la portion en matériau composite présente une deuxième portion tronconique formant la deuxième surface de liaison, lesdites première portion tronconique et deuxième portion tronconique étant en contact de manière à former la zone de jonction entre la portion métallique et la portion en matériau composite. Selon un mode de réalisation, la zone de jonction est en escalier le long de l'axe longitudinal du composant tubulaire. Autrement dit, la première surface de liaison est en escalier le long de l'axe longitudinal du composant tubulaire et la deuxième surface de liaison est en escalier le long de l'axe longitudinal du composant tubulaire. Selon un mode de réalisation, la zone de jonction est crénelée. Autrement dit, la première surface de liaison est crénelée et la deuxième surface de liaison est crénelée. Selon un mode de réalisation, la première surface de liaison comporte une alternance de surfaces planes et de gorges et la deuxième surface de liaison comporte une alternance de surface planes et de gorges, les surfaces planes de la première surface de liaison étant en contact avec un fond de gorges correspondantes de la deuxième surface de liaison et inversement.

De préférence, la portion métallique présente une épaisseur radiale décroissante depuis une jonction entre la première portion filetée et la deuxième portion filetée et en s'éloignant axialement de l'extrémité libre du composant tubulaire.

Grâce à ces caractéristiques, la zone de jonction peut être maximisée en présentant une composante axiale sans nécessiter d'augmentation de l'épaisseur radiale du composant tubulaire.

De préférence, ladite diminution d'épaisseur radiale de la portion métallique est progressive. Une telle diminution progressive permet une transition douce entre la zone du composant tubulaire formée par la portion métallique et la zone du composant tubulaire formée par la portion en matériau composite, une telle transition douce ne génère pas de concentration des contraintes au niveau de la zone de jonction entre la portion métallique et la portion en matériau composite lorsque le composant tubulaire est soumis à des contraintes.

Selon un mode de réalisation, le composant tubulaire comporte une première surface radiale et une deuxième surface radiale, la première surface radiale étant radialement opposée à la deuxième surface radiale, le filetage étant agencé sur ladite première surface radiale, la portion métallique formant au moins une partie de ladite deuxième surface radiale. Selon un mode de réalisation, la première surface radiale est radialement à l'extérieur de la deuxième surface radiale. Autrement dit, selon ce mode de réalisation, l'élément de connexion fileté est un élément de connexion mâle.

Selon un mode de réalisation, la première surface radiale est radialement à l'intérieur de la deuxième surface radiale. Autrement dit, selon ce mode de réalisation, l'élément de connexion fileté est un élément de connexion femelle.

Selon un mode de réalisation, une extrémité de la portion métallique opposée à l'extrémité libre du composant tubulaire présente une épaisseur radiale minimale de la portion métallique.

Selon un mode de réalisation, la deuxième surface radiale du composant tubulaire est partiellement formée par l'extrémité de la portion métallique opposée à l'extrémité libre du composant tubulaire.

Selon un mode de réalisation, l'extrémité de la portion métallique opposée à l'extrémité libre du composant tubulaire est axialement décalée par rapport à une jonction entre la première portion filetée et la deuxième portion filetée.

Selon un mode de réalisation, une extrémité de la portion métallique opposée à l'extrémité libre du composant tubulaire est axialement décalée par rapport à une jonction entre le corps principal et l'élément de connexion fileté.

Grâce à ces caractéristiques, les zones de transition dans le composant tubulaire que sont ladite extrémité du filetage, l'extrémité de la portion métallique ou encore la jonction entre la première portion filetée et la deuxième portion filetée sont réparties axialement dans le composant tubulaire. Cette répartition axiale des zones de transition assure une bonne résistance mécanique au composant tubulaire, en particulier car cela évite la présence d'une zone présentant une faible résistance mécanique du fait de la présence d'une pluralité de zones de transition axialement regroupées.

Selon un mode de réalisation, une longueur axiale de la portion métallique est supérieure à une longueur axiale de l'élément de connexion fileté.

Autrement dit, selon un mode de réalisation, l'extrémité de la portion métallique opposée à l'extrémité libre du composant tubulaire est axialement située dans le corps du composant tubulaire.

Grâce à ces caractéristiques, on s'assure que l'extrémité de la portion métallique est décalée axialement avec l'extrémité du filetage, avec les avantages qui en découlent expliqués ci-dessus.

En outre, l'extrémité de la portion métallique située dans le corps du composant tubulaire permet de positionner la zone de concentration des contraintes imposée par la transition entre la fin de la portion métallique et la portion en matériau composite dans une zone ou la portion en matériau composite présente la plus grande épaisseur et donc la meilleure résistance mécanique. Dès lors, cette zone de concentration des contraintes présente un impact limité sur la résistance mécanique du composant tubulaire.

Grâce à ces caractéristiques également, la portion de matériau composite formant la deuxième portion filetée est intégralement intercalée entre ladite deuxième portion filetée et la portion métallique. Ainsi, la zone de liaison entre la portion en matériau composite et la portion métallique est bien soutenue mécaniquement par la coopération entre les filetages du composant tubulaire et du deuxième composant tubulaire avec lequel le composant tubulaire est associé pour former le joint fileté tubulaire.

Selon un mode de réalisation, la première portion filetée comporte au moins trois dents.

Grâce à ces caractéristiques, le composant tubulaire présente une bonne résistance mécanique. En effet, la demanderesse a constaté que les premières dents du filetage en partant de l'extrémité libre du composant tubulaire étaient sujettes à des contraintes particulièrement importantes. Ainsi, la réalisation de ces premières dents dans la portion métallique offre des propriétés de résistance mécanique importantes.

Selon un mode de réalisation, la longueur axiale de la deuxième portion filetée est au moins égale à 25% d'une longueur axiale du filetage.

Grâce à ces caractéristiques, on s'assure que la jonction entre la première portion filetée et la deuxième portion filetée n'est pas située trop proche de l'extrémité du filetage opposée à l'extrémité libre du composant tubulaire. En effet, la demanderesse a constaté que, de manière analogue à l'extrémité du filetage située proche de l'extrémité libre du composant tubulaire, l'extrémité du filetage opposée à l'extrémité du libre du composant tubulaire est également sujette à des contraintes importantes. Ainsi, grâce à la longueur axiale de la deuxième portion filetée telle que définie ci-dessus, on s'assure que la jonction entre la première portion filetée et la deuxième portion filetée, qui constitue une zone de transition et donc une zone mécaniquement faible, n'est pas située dans une zone du filetage fortement sollicitée, typiquement l'extrémité du filetage opposée à l'extrémité libre du composant tubulaire.

Autrement dit, la demanderesse a constaté que les deux extrémités du filetage étaient sujettes à des contraintes importantes. Dès lors, grâces aux caractéristiques ci-dessus, la demanderesse s'assure que les zone de transition entre la portion métallique et la portion en matériau composite, typiquement la jonction entre la première portion filetée et la deuxième portion filetée ou encore la jonction entre l'extrémité de la portion métallique opposée à l'extrémité libre du composant tubulaire et la portion en matériau composite, qui sont des zones mécaniquement plus fragiles, ne sont pas situées dans des zones du composant tubulaire sujettes à des contraintes importantes.

Selon un mode de réalisation, la deuxième portion filetée se développe sur une épaisseur radiale comprise entre 25% et 75% d'une épaisseur radiale sur laquelle se développe le filetage.

Grâce à ces caractéristiques, la jonction entre la première portion filetée et la deuxième portion filetée est agencée sensiblement au centre du filetage, évitant ainsi que ladite jonction ne soit située dans une zone de forte contrainte.

Selon un mode de réalisation, le corps du composant tubulaire comporte un revêtement interne, ledit revêtement interne étant en matériau anti-corrosion.

Selon un mode de réalisation, la portion métallique se développe axialement dans le corps du composant tubulaire sur une longueur axiale supérieure ou égale à 50% de la longueur axiale du filetage.

Grâce à ces caractéristiques, la jonction entre la portion métallique et la portion en matériau composite est douce et l'extrémité de la portion métallique est suffisamment éloignée de l'extrémité du filetage opposée à l'extrémité libre du composant tubulaire pour assurer une bonne répartition des zones mécaniquement fragiles comme expliqué ci-dessus.

De préférence, la portion métallique se développe axialement dans le corps du composant tubulaire sur une longueur axiale inférieure à deux fois la longueur de l'élément de connexion filetée. En effet, afin de conserver un poids satisfaisant pour le composant tubulaire, il convient de maximiser la portion en matériau composite par rapport à la portion métallique, la portion métallique ne devant donc pas s'étendre trop loin axialement dans le corps principal du composant tubulaire. Autrement dit, le corps principal du composant tubulaire est principalement formé par la portion en matériau composite, principalement signifiant qu'il est intégralement formé par la portion en matériau composite à l'exception d'une petite zone formée par la portion métallique, ladite petite zone présentant une épaisseur radiale réduite du fait de l'épaisseur radiale décroissante de la portion métallique et une longueur axiale limitée comparativement à la longueur axiale du corps principal.

Selon un mode de réalisation, la portion métallique est réalisée dans un métal dont le module d'Young (par exemple entre 180 et 220 Gpa) est supérieur au module d'Young du matériau composite (par exemple entre 20 et 150 Gpa).

Selon un mode de réalisation, la portion métallique peut être réalisée en acier.

Selon un mode de réalisation, le filetage est réalisé sur une surface externe du composant tubulaire ou sur une surface interne du composant tubulaire.

L'invention fournit ainsi un composant tubulaire léger du fait de la grande proportion en matériau composite. Ce composant tubulaire présente en outre de bonnes caractéristiques de résistance mécanique du fait de la présence de la portion métallique. Ce composant tubulaire présente en outre une liaison entre la portion métallique et la portion en matériau composite mécaniquement fiable vis-à-vis des contraintes du fait du positionnement de cette liaison radialement entre la portion métallique et un deuxième composant tubulaire et du décalage axial des zones de transition représentant des zones mécaniquement fragiles.

Selon un mode de réalisation, l'invention fournit aussi un joint fileté tubulaire comprenant un premier composant tubulaire équipé d'un premier élément de connexion fileté et un deuxième composant tubulaire équipé d'un deuxième élément de connexion fileté, le deuxième élément de connexion fileté étant vissé avec le premier élément de connexion fileté, au moins un des premier composant tubulaire et deuxième composant tubulaire étant réalisé comme précité.

Selon un mode de réalisation, le premier composant tubulaire et le deuxième composant tubulaire sont réalisés comme précités.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig. 1] La figure 1 représente une vue en coupe partielle d'un composant tubulaire.
[Fig. 2] La figure 2 est une vue en coupe partielle d'un composant tubulaire de la figure 1 associé à un deuxième composant tubulaire afin de former un joint fileté tubulaire.
[Fig. 3] La figure 3 est une vue en coupe partielle d'un composant tubulaire de la figure 1 associé à une variante de deuxième composant tubulaire afin de former une variante de joint fileté tubulaire

### Description des modes de réalisation

Dans la description et les figures, l'axe X correspond à l'axe de révolution du composant tubulaire ou, lorsque deux composants tubulaires sont associés pour former conjointement un joint tubulaire fileté, l'axe de révolution d'un tel joint tubulaire fileté, l'axe de révolution dudit joint tubulaire fileté étant alors coaxial des axes de révolutions respectifs desdits deux composants tubulaires associés. Par convention, l'orientation « radiale » est dirigée orthogonalement à l'axe X et l'orientation « axiale » est dirigée parallèlement à l'axe X. Les termes « externe » et « interne » sont utilisés pour définir la position relative d'un élément, par référence à l'axe X. Un élément proche de l'axe X est ainsi qualifié d'interne par opposition à un élément externe situé radialement en périphérie.

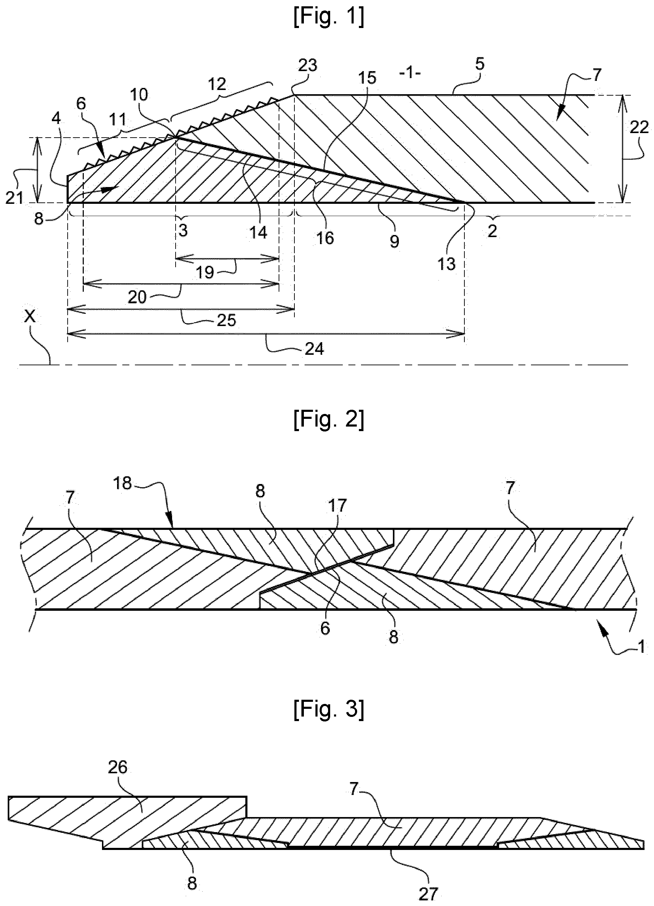

En relation avec la figure 1, on décrit ci-dessous un composant tubulaire 1 selon un mode de réalisation. Le composant tubulaire 1 comporte un corps principal 2 et un élément de connexion fileté 3. Le corps principal 2 est de forme tubulaire selon l'axe de révolution X. L'élément de connexion fileté 3 s'étend axialement depuis le corps principal 2 jusqu'à une extrémité libre 4 du composant tubulaire 1, une extrémité de l'élément de connexion fileté 3 opposée au corps principal 2 formant l'extrémité libre 4 du composant tubulaire 1.

Dans le mode de réalisation illustré sur la figure 1, l'élément de connexion fileté 3 est de type mâle, c'est-à-dire qu'il présente sur une face radialement externe 5 du composant tubulaire 1 un filetage 6. Cependant, l'invention s'applique de façon analogue à une connexion de type femelle, c'est-à-dire présentant un élément de connexion fileté dont le filetage est formé sur une face radialement interne du composant tubulaire, comme expliqué ci-après.

L'élément de connexion fileté 3 présente une épaisseur radiale décroissante le long de l'axe X depuis le corps principal 2 du composant tubulaire 1 en direction de l'extrémité libre 4 du composant tubulaire 1. Le filetage 6 présente une inclinaison par rapport à l'axe X. En outre, l'élément de connexion fileté 3 présente une épaisseur radiale minimale au niveau de l'extrémité libre 4 du composant tubulaire 1.

Seul le filetage 6 est illustré est décrit ci-après en regard de la figure 1, toutefois l'élément de connexion fileté 3 peut prendre de nombreuses formes distinctes selon le type de joint tubulaire fileté souhaité. À titre d'exemples non limitatifs, l'élément de connexion fileté pourrait présenter une ou plusieurs portées d'étanchéité, une ou plusieurs surfaces de butées, un ou plusieurs étages, un ou plusieurs filetages, une inclinaison de filetage par rapport à l'axe X plus ou moins importante, par exemple de 6%, etc.

Le composant tubulaire 1 comporte une portion en matériau composite 7 et une portion métallique 8.

La portion en matériau composite 7 comporte une pluralité de couches de fibres empilées radialement les unes sur les autres. Pour la fabrication du composant tubulaire 1, le matériau composite se présente dans un état initial sous la forme d'une bobine de fil de fibres, par exemple de fibres tressées, filées, tissées, tricotées ou autres, ledit fil étant imprégné ou préimprégné par une matrice. Cette bobine de fibre est réalisée dans un matériau composite composé par exemple de fibres de verre et de résine époxy.

Afin de mettre en forme la portion en matériau composite 7 du composant tubulaire 1, un procédé de fabrication par enroulement filamentaire est de préférence utilisé. Lors de ce procédé de fabrication, le fil de fibres est enroulé de manière hélicoïdale et selon une première direction axiale autour d'un mandrin, ledit mandrin s'étendant selon l'axe X. Puis, lorsqu'une extrémité de la portion en matériau composite 7 est atteinte, le fil de fibres est enroulé de manière hélicoïdale selon une deuxième direction axiale opposée à la première direction axiale afin de superposer radialement le fil de fibre en cours d'enrobage sur la couche précédente. Cette alternance est reproduite sur plusieurs couches qui se superposent jusqu'à obtenir l'épaisseur radiale souhaitée pour la portion en matériau composite 7.

La portion métallique 8 est agencée à l'extrémité du composant tubulaire 1. Plus particulièrement, la portion métallique 8 forme l'extrémité libre 4 du composant tubulaire 1.

La portion métallique 8 forme partiellement l'élément de connexion fileté 3. En outre, la portion métallique 8 forme partiellement le corps principal 2 du composant tubulaire 1. Autrement dit, la portion métallique 8 se développe axialement à la fois dans l'élément de connexion fileté 3 et dans le corps principal 2.

De même, la portion en matériau composite 7 forme partiellement l'élément de connexion fileté 3. En outre, la portion en matériau composite 7 forme partiellement le corps principal 2 du composant tubulaire 1. Autrement dit, la portion en matériau composite 7 se développe axialement à la fois dans l'élément de connexion fileté 3 et dans le corps principal 2. Ainsi, l'élément de connexion fileté 3 est formé à la fois par la portion métallique 8 et par la portion en matériau composite 7 et, de même, le corps principal 2 est formé à la fois par la portion métallique 8 et la portion en matériau composite 7.

La face radialement externe 5 du composant tubulaire 1 est formée par la portion en matériau composite 7 seule au niveau du corps principal 2. La face radialement externe 5 du composant tubulaire 1 est formée conjointement par la portion en matériau composite 7 et la portion métallique 8 au niveau de l'élément de connexion fileté 3. Une face radialement interne 9 du composant tubulaire 1 est formée par la portion métallique 8 seule au niveau de l'élément de connexion fileté 3. Ladite face radialement interne 9 du composant tubulaire 1 est formée conjointement par la portion métallique 8 et la portion en matériau composite 7 au niveau du corps principal 2.

La face radialement externe 5 du composant tubulaire présente au niveau de l'élément de connexion fileté 3 une jonction externe 10 entre la portion métallique 8 et la portion en matériau composite 7. Le filetage 6 étant réalisé sur la face radialement externe 5 du composant tubulaire 1 au niveau de l'élément de connexion fileté 3, le filetage 6 présente une première portion filetée 11 formée par la portion métallique 8 et une deuxième portion filetée 12 formée par la portion en matériau composite 7, lesdites première portion filetée 11 et deuxième portion filetée 12 étant jointives au niveau de la jonction externe 10. De même, la face radialement interne 9 du composant tubulaire présente une jonction interne 13 entre la partie de ladite face radialement interne 9 formée par la portion métallique 8 et la portion en matériau composite 7.

L'épaisseur radiale de la portion métallique 8 est croissante le long de l'axe X depuis l'extrémité libre 4 du composant tubulaire 1 jusqu'à la jonction externe 10. Inversement, l'épaisseur radiale de la portion métallique 8 est décroissante le long de l'axe X depuis ladite jonction externe 10 jusqu'à la jonction interne 13. La portion métallique 8 présente une première surface de liaison 14 entre la jonction externe 10 et la jonction interne 13.

Sur le mode de réalisation illustré sur la figure 1, cette première surface de liaison 14 est plane et inclinée par rapport à l'axe X, la portion métallique 8 présentant une épaisseur radiale maximale au niveau de la jonction externe 10 et une épaisseur radiale minimale au niveau de la jonction interne 13. Lors de la fabrication du composant tubulaire 1, la première surface de liaison 14 sert de support à l'enroulement du matériau composite en lieu et place du mandrin au niveau de l'élément de connexion fileté 3 et d'une partie du corps principal 2 axialement située entre l'élément de connexion fileté 3 et la jonction interne 13. Ainsi, la portion en matériau composite 7 forme une deuxième surface de liaison 15 qui est en contact avec la première surface de liaison 14, la portion métallique 8 et la portion en matériau composite 7 étant liées ensemble au niveau d'une zone de jonction 16 crée par le contact entre la première surface de liaison 14 et la deuxième surface de liaison 15. Typiquement, cette zone de jonction 16 se développe entre la jonction externe 10 et la jonction interne 13.

Cependant, la liaison entre la portion métallique 8 et la portion en matériau composite 7 au niveau de la zone de jonction 16 constitue une transition entre deux matériaux distincts et donc une zone de faiblesse dans le composant tubulaire 1, en particulier lorsque le composant tubulaire 1 est sujet à des contraintes importantes. Il est donc important de s'assurer que la liaison entre la portion en matériau composite 7 et la portion métallique 8 au niveau de ladite zone de jonction 16 soit la plus stable et fiable possible.

Pour cela, comme illustré sur la figure 2, cette zone de jonction 16 est agencée radialement entre la portion métallique 8 et au moins une partie du filetage 6 destinée à coopérer avec un filetage 17 d'un autre composant tubulaire 18 auquel est associé le composant tubulaire 1. Afin de s'assurer que la zone de jonction 16 est intercalée radialement entre la portion métallique 8 et l'autre composant tubulaire 18, une partie du filetage 6, typiquement la deuxième portion filetée 12, est réalisée par la portion en matériau composite 7. Autrement dit, la zone de jonction 16 est radialement intercalée entre la deuxième portion filetée 12, qui est destinée à coopérer avec le filetage 17 dudit autre composant tubulaire 18, et la portion métallique 8. Ainsi, lorsque le composant tubulaire 1 forme avec l'autre composant tubulaire 18 un joint tubulaire fileté, le filetage 17 de l'autre composant tubulaire 18 participe au maintien en contact de la deuxième surface de liaison 15 avec la première surface de liaison 14, assurant ainsi la stabilité de la zone de jonction 16.

En outre, la diminution de l'épaisseur radiale de la portion métallique 8 est de préférence de façon progressive entre la jonction externe 10 et la jonction interne 13, permettant ainsi de maximiser la surface de coopération entre la portion métallique 8 et la portion en matériau composite 7, c'est-à-dire la zone de jonction 16 entre la première surface de liaison 14 et la deuxième surface de liaison 15. Cette maximisation de la zone de jonction 16 offre une bonne résistance et une fiabilité importante à la liaison entre la portion métallique 8 et la portion en matériau composite 7.

La demanderesse a constaté que des contraintes importantes sont présentes dans les dents du filetage 6 qui sont le plus proche de l'extrémité libre 4 du composant tubulaire 1. Ainsi, avantageusement, la première portion filetée 11 comporte au moins trois dents du filetage 6.

De même, la demanderesse a constaté que des contraintes importantes sont présentes dans les dents du filetage 6 les plus proches du corps principal 2. Ainsi, avantageusement, la deuxième portion filetée 12 comporte au moins trois dents du filetage 6. De préférence, la deuxième portion filetée présente une longueur axiale 19 comprise entre 25% et 75% d'une longueur axiale 20 du filetage 6. Idéalement, la longueur axiale 19 de la deuxième portion filetée 12 est de 50% de la longueur axiale 20 du filetage 6.

Une épaisseur radiale de la deuxième portion filetée est comprise entre 25% et 75% d'une épaisseur radiale du filetage 6. Une telle épaisseur radiale de la deuxième portion filetée 12 garantit que la jonction externe 10 est proche axialement d'un milieu du filetage 6, et donc éloigné des zones sujettes à de fortes contraintes que sont les extrémités du filetage 6.

Selon un mode de réalisation, une épaisseur radiale 21 de l'élément de connexion fileté 3 au niveau de la jonction externe 10 est comprise entre 25% et 75% d'une épaisseur radiale 22 du corps principal 2 du composant tubulaire 1. Une telle épaisseur radiale 21 de l'élément de connexion fileté 3 au niveau de la jonction externe 10 garantit également que ladite jonction externe 10 est proche axialement d'un milieu du filetage 6, et donc éloigné des zones sujettes à de fortes contraintes que sont les extrémités du filetage 6.

Une telle deuxième portion filetée 12 garantit en outre que la zone de jonction 16 est intercalée radialement entre l'autre composant tubulaire 18 et la portion métallique 8 sur une longueur axiale suffisante pour assurer la coopération dudit autre composant tubulaire 18 pour maintenir la première surface de liaison 14 et la deuxième surface de liaison 15 en contact.

Dans un composant tubulaire 1 tel que ci-dessus, les zones de changement structurels constituent des zones de faiblesse mécanique dans le composant tubulaire 1. Ainsi, la jonction externe 10, qui constitue du fait du changement de matériau une transition structurelle entre la première portion filetée 11 et la deuxième portion filetée 12, est une première zone de faiblesse mécanique dans le composant tubulaire 1. De façon analogue et pour les mêmes raisons, la jonction interne 13 constitue également une zone de faiblesse mécanique dans le composant tubulaire 1. Enfin, une jonction 23 entre le corps principal 2 et l'élément de connexion fileté 3 constitue également une zone de faiblesse mécanique du composant tubulaire 1.

Afin fournir un composant tubulaire 1 présentant une bonne résistance mécanique, il est important de ne pas regrouper axialement ces zones faibles du composant tubulaire 1. Ainsi, avantageusement, la jonction interne 13 et la jonction 23 entre le corps principal 2 et l'élément de connexion fileté 3 sont axialement décalés. De même, la jonction interne 13 et la jonction externe 10 sont également axialement décalés.

Afin de garantir cette séparation axiale entre la jonction externe 10, la jonction interne 13 et la jonction 23 entre le corps principal 2 et l'élément de connexion fileté 3, une longueur axiale 24 de la portion métallique 8 est supérieure à une longueur axiale 25 de l'élément de connexion fileté 3. Plus particulièrement, la longueur axiale 24 de la portion métallique 8 est supérieure ou égale à 150% de la longueur axiale 25 de l'élément de connexion fileté 3. De préférence, ladite longueur axiale 24 de la portion métallique 8 est inférieure à deux fois la longueur axiale 25 de l'élément de connexion fileté 3, afin de ne pas avoir une portion métallique 8 trop longue qui augmenterait en conséquence le poids du composant tubulaire 1.

Sur les figures, un seul élément de connexion fileté 3 est illustré, l'extrémité libre du composant tubulaire 1 opposée à l'élément de connexion fileté 3 comportant un autre élément de connexion fileté, cet autre élément de connexion fileté présentant des caractéristiques analogues ou différentes des caractéristiques de l'élément de connexion fileté 3.

Autrement dit, le composant tubulaire 1 comporte deux éléments de connexion filetés réalisés de part et d'autre du corps principal 2. Ces éléments de connexion filetés peuvent être soit un élément de connexion fileté mâle comportant un filetage hélicoïdal réalisé sur la face externe 5 du composant tubulaire 1, comme illustré par l'élément de connexion fileté 3 sur la figure 1, soit un élément de connexion fileté femelle comportant un filetage hélicoïdal réalisé sur la face interne 9 du composant tubulaire 1. L'élément de connexion fileté 3 mâle est ainsi destiné à être inséré pour vissage dans l'élément de connexion fileté femelle par l'intermédiaire de leurs filetages respectifs, comme illustré sur les figures 2 ou 3.

Ainsi, un composant tubulaire 1 peut être un tube mâle/femelle de longue dimension, à savoir de l'ordre d'une dizaine de mètres, comportant à une première extrémité un élément de connexion 3 de type mâle et à une deuxième extrémité un élément de connexion fileté de type femelle. Les tubes mâle/femelle sont donc liés les uns aux autres de sorte à former un assemblage dit « intégral », par exemple tel qu'illustré sur la figure 2, c'est-à-dire sans l'utilisation d'une pièce rapportée liant les tubes entre eux.

Selon un autre mode de réalisation, et comme illustré sur la figure 3, le composant tubulaire 1 peut également être un tube mâle/mâle de longue dimension, à savoir de l'ordre d'une dizaine de mètres, comportant à une première extrémité un élément de connexion fileté 3 de type mâle et à une deuxième extrémité un autre élément de connexion fileté de type mâle. Les tubes mâle/mâle sont assemblés à l'aide d'un autre composant tubulaire, à savoir un manchon d'accouplement femelle 26 de sorte à former une connexion filetée dite « manchonné ». Un manchon d'accouplement femelle 26 est un tube de petite dimension, à savoir de l'ordre de plusieurs dizaines de centimètres, comportant à une première extrémité un élément de connexion fileté de type femelle et à une deuxième extrémité un autre élément de connexion fileté de type femelle.

Sur cette figure 3, le compostant tubulaire 1 comporte en outre un revêtement interne 27. Un tel revêtement interne 27 est de préférence réalisé en un matériau anti-corrosion. Un tel revêtement interne 27 forme la face interne 9 du composant tubulaire sur toute sa longueur à l'exception des portions de ladite face interne 9 formées par la portions métallique 8 (ou les portions métalliques dans le cas où les deux extrémités du composant tubulaire 1 comporteraient une portion métallique respective). Ce revêtement interne 27 permet une meilleure résistance à l'usure du composant tubulaire, en particulier au regard de la corrosion.

L'assemblage d'une pluralité de composants tubulaires 1 les uns aux autres permet par exemple de former une garniture de forage, une colonne de tube de cuvelage ou de tubage ou encore une colonne de tube de production pour un puits de gaz ou de pétrole.

Bien que l'invention ait été décrite en liaison avec plusieurs modes de réalisation particuliers, il est bien évident qu'elle n'y est nullement limitée.

Ainsi, l'élément de connexion fileté peut comporter un filetage réalisé en plusieurs parties successives, par exemple en deux parties séparées par une butée centrale, par une portée d'étanchéité ou encore par un espace vide servant de réservoir de graisse. Dans un tel cas, la jonction externe peut être située axialement dans l'une des parties du filetage comme décrit ci-dessus ou bien au contraire dans la zone centrale séparant les deux parties du filetage. Dans un tel cas, le filetage comporte néanmoins une première portion filetée réalisée dans la portion métallique et une deuxième portion filetée réalisée dans la portion en matériau composite. Ainsi, la zone de jonction entre la portion métallique et la portion en matériau composite reste intercalée radialement entre le filetage et la portion métallique de manière à permettre la coopération d'un autre composant tubulaire afin de préserver cette zone de jonction.

De même, le revêtement anti-corrosion illustré sur la figure 3 peut être utilisé de façon analogue dans les autres modes de réalisations illustrés par exemple sur les figures 1 et 2.

De même, les première surface de liaison et deuxième surface de liaison peuvent être planes comme illustré ci-dessus ou de forme complexe, par exemple en étant au moins en partie crénelées, en comportant des gorges/dents ou autre. De telles surfaces de liaison présentant des formes complexes peuvent offrir une plus grande surface de coopération et donc une meilleure liaison entre la portion métallique et la portion en matériau composite.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Composant tubulaire (1) pour joint fileté tubulaire, ledit compostant tubulaire (1) comportant un corps principal (2) et un élément de connexion fileté (3), ledit élément de connexion fileté (3) s'étendant axialement depuis le corps principal (2) jusqu'à une extrémité libre (4) du composant tubulaire (1), l'élément de connexion fileté (3) comportant un filetage (6) hélicoïdal, le composant tubulaire (1) comportant une portion métallique (8) et une portion en matériau composite (7),
et dans lequel la portion métallique (8) forme l'extrémité libre (4) du composant tubulaire (1), le filetage (6) hélicoïdal comportant une première portion filetée (11) et une deuxième portion filetée (12), la portion métallique (8) comportant la première portion filetée (11), la portion en matériau composite (7) comportant la deuxième portion filetée (12), la portion de matériau composite (7) étant en contact radial avec la portion métallique (8) au droit de la deuxième portion filetée (12).

2. Composant tubulaire selon la revendication 1, dans lequel la portion métallique (8) présente une première surface de liaison (14), la portion en matériau composite (7) présente une deuxième surface de liaison (15), la première surface de liaison (14) et la deuxième surface de liaison (15) étant en contact et formant conjointement une zone de jonction (16) entre la portion métallique (8) et la portion en matériau composite (7), ladite zone de jonction (16) présentant une composante radiale et une composante axiale.

3. Composant tubulaire selon l'une des revendications 1 ou 2, dans lequel la portion métallique (8) présente une épaisseur radiale décroissante depuis une jonction (10) entre la première portion filetée (11) et la deuxième portion filetée (12) et en s'éloignant axialement de l'extrémité libre (4) du composant tubulaire (1).

4. Composant tubulaire selon l'une des revendications précédentes, dans lequel le composant tubulaire (1) comporte une première surface radiale (5) et une deuxième surface radiale (9), la première surface radiale (5) étant radialement opposée à la deuxième surface radiale (9), le filetage (6) étant agencé sur ladite première surface radiale (5), la portion métallique (8) formant au moins une partie de ladite deuxième surface radiale (9).

5. Composant tubulaire selon l'une des revendications précédentes, dans lequel une extrémité de la portion métallique (8) opposée à l'extrémité libre (4) du composant tubulaire (1) est axialement décalée par rapport à une jonction (10) entre la première portion filetée (11) et la deuxième portion filetée (12).

6. Composant tubulaire selon l'une des revendications précédentes, dans lequel une extrémité de la portion métallique (8) opposée à l'extrémité libre (4) du composant tubulaire (1) est axialement décalée par rapport à une jonction entre le corps principal (2) et l'élément de connexion fileté (3).

7. Composant tubulaire selon l'une des revendications précédentes, dans lequel une longueur axiale (24) de la portion métallique (8) est supérieure à une longueur axiale (25) de l'élément de connexion fileté (3).

8. Composant tubulaire selon l'une des revendications précédentes, dans lequel la première portion filetée (11) comporte au moins trois dents.

9. Composant tubulaire selon l'une des revendications précédentes, dans lequel une longueur axiale (19) de la deuxième portion filetée (12) est au moins égale à 25% d'une longueur axiale (20) du filetage (6).

10. Composant tubulaire selon l'une des revendications précédentes, dans lequel la deuxième portion filetée (12) se développe sur une épaisseur radiale comprise entre 25% et 75% d'une épaisseur radiale sur laquelle se développe le filetage (6).

11. Composant tubulaire selon l'une des revendications précédentes, dans lequel le corps principal (2) du composant tubulaire (1) comporte un revêtement interne (27), ledit revêtement interne (27) étant en matériau anti-corrosion.

## Patentansprüche

1. Rohrförmiges Bauteil (1) für eine rohrförmige Gewindeverbindung, wobei das rohrförmige Bauteil (1) einen Hauptkörper (2) und ein Gewindeanschlusselement (3) umfasst, wobei sich das Gewindeanschlusselement (3) axial vom Hauptkörper (2) bis zu einem freien Ende (4) des rohrförmigen Bauteils (1) erstreckt, wobei das Gewindeanschlusselement (3) ein spiralförmiges Gewinde (6) umfasst, wobei das rohrförmige Bauteil (1) einen Metallabschnitt (8) und einen Abschnitt (7) aus Verbundmaterial umfasst,
und wobei der Metallabschnitt (8) das freie Ende (4) des rohrförmigen Bauteils (1) bildet, das spiralförmige Gewinde (6) einen ersten Gewindeabschnitt (11) und einen zweiten Gewindeabschnitt (12) umfasst, der Metallabschnitt (8) den ersten Gewindeabschnitt (11) umfasst, der Abschnitt (7) aus Verbundmaterial den zweiten Gewindeabschnitt (12) umfasst und der Abschnitt (7) aus Verbundmaterial unter dem zweiten Gewindeabschnitt (12) in radialem Kontakt mit dem Metallabschnitt (8) steht.

2. Rohrförmiges Bauteil nach Anspruch 1, wobei der Metallabschnitt (8) eine erste Verbindungsfläche (14) aufweist, der Abschnitt (7) aus Verbundmaterial eine zweite Verbindungsfläche (15) aufweist, die erste Verbindungsfläche (14) und die zweite Verbindungsfläche (15) in Kontakt stehen und gemeinsam einen Verbindungsbereich (16) zwischen dem Metallabschnitt (8) und dem Abschnitt (7) aus Verbundmaterial bilden, wobei der Verbindungsbereich (16) eine radiale Komponente und eine axiale Komponente aufweist.

3. Rohrförmiges Bauteil nach einem der Ansprüche 1 oder 2, wobei der Metallabschnitt (8) eine radiale Dicke aufweist, die von einer Verbindung (10) zwischen dem ersten Gewindeabschnitt (11) und dem zweiten Gewindeabschnitt (12) abnimmt und sich dabei axial vom freien Ende (4) des rohrförmigen Bauteils (1) entfernt.

4. Rohrförmiges Bauteil nach einem der vorangehenden Ansprüche, wobei das rohrförmige Bauteil (1) eine erste radiale Fläche (5) und eine zweite radiale Fläche (9) umfasst, wobei die erste radiale Fläche (5) der zweiten radialen Fläche (9) radial gegenüberliegt, wobei das Gewinde (6) an der ersten radialen Fläche (5) angeordnet ist, wobei der Metallabschnitt (8) zumindest einen Teil der zweiten radialen Fläche (9) bildet.

5. Rohrförmiges Bauteil nach einem der vorangehenden Ansprüche, wobei ein dem freien Ende (4) des rohrförmigen Bauteils (1) gegenüberliegendes Ende des Metallabschnitts (8) in Bezug auf eine Verbindung (10) zwischen dem ersten Gewindeabschnitt (11) und dem zweiten Gewindeabschnitt (12) axial versetzt ist.

6. Rohrförmiges Bauteil nach einem der vorangehenden Ansprüche, wobei ein dem freien Ende (4) des rohrförmigen Bauteils (1) gegenüberliegendes Ende des Metallabschnitts (8) in Bezug auf eine Verbindung zwischen dem Hauptkörper (2) und dem Gewindeanschlusselement (3) axial versetzt ist.

7. Rohrförmiges Bauteil nach einem der vorangehenden Ansprüche, wobei eine axiale Länge (24) des Metallabschnitts (8) größer als eine axiale Länge (25) des Gewindeanschlusselements (3) ist.

8. Rohrförmiges Bauteil nach einem der vorangehenden Ansprüche, wobei der erste Gewindeabschnitt (11) mindestens drei Zähne umfasst.

9. Rohrförmiges Bauteil nach einem der vorangehenden Ansprüche, wobei eine axiale Länge (19) des zweiten Gewindeabschnitts (12) mindestens 25 % einer axialen Länge (20) des Gewindes (6) beträgt.

10. Rohrförmiges Bauteil nach einem der vorangehenden Ansprüche, wobei sich der zweite Gewindeabschnitt (12) über eine radiale Dicke entwickelt, die zwischen 25 % und 75 % einer radialen Dicke beträgt, über die sich das Gewinde (6) entwickelt.

11. Rohrförmiges Bauteil nach einem der vorangehenden Ansprüche, wobei der Hauptkörper (2) des rohrförmigen Bauteils (1) eine innere Beschichtung (27) umfasst, wobei die innere Beschichtung (27) aus korrosionsbeständigem Material ist.

## Claims

1. Tubular component (1) for a tubular threaded joint, said tubular component (1) comprising a main body (2) and a threaded connection element (3), said threaded connection element (3) extending axially from the main body (2) to a free end (4) of the tubular component (1), the threaded connection element (3) comprising a helical thread (6), the tubular component (1) comprising a metal portion (8) and a composite material portion (7),
and wherein the metal portion (8) forms the free end (4) of the tubular component (1), the helical thread (6) comprising a first threaded portion (11) and a second threaded portion (12), the metal portion (8) comprising the first threaded portion (11), the composite material portion (7) comprising the second threaded portion (12), the composite material portion (7) being in radial contact with the metal portion (8) in line with the second threaded portion (12).

2. Tubular component according to Claim 1, wherein the metal portion (8) has a first connecting surface (14), and the composite material portion (7) has a second connecting surface (15), the first connecting surface (14) and the second connecting surface (15) being in contact and jointly forming a junction zone (16) between the metal portion (8) and the composite material portion (7), said junction zone (16) having a radial component and an axial component.

3. Tubular component according either of Claims 1 and 2, wherein the metal portion (8) has a decreasing radial thickness from a junction (10) between the first threaded portion (11) and the second threaded portion (12) and axially away from the free end (4) of the tubular component (1).

4. Tubular component according to one of the preceding claims, wherein the tubular component (1) comprises a first radial surface (5) and a second radial surface (9), the first radial surface (5) being radially opposite the second radial surface (9), the thread (6) being arranged on said first radial surface (5), the metal portion (8) forming at least part of said second radial surface (9).

5. Tubular component according to one of the preceding claims, wherein an end of the metal portion (8) opposite the free end (4) of the tubular component (1) is axially offset from a junction (10) between the first threaded portion (11) and the second threaded portion (12).

6. Tubular component according to one of the preceding claims, wherein an end of the metal portion (8) opposite the free end (4) of the tubular component (1) is axially offset from a junction between the main body (2) and the threaded connection element (3).

7. Tubular component according to one of the preceding claims, wherein an axial length (24) of the metal portion (8) is greater than an axial length (25) of the threaded connection element (3).

8. Tubular component according to one of the preceding claims, wherein the first threaded portion (11) comprises at least three teeth.

9. Tubular component according to one of the preceding claims, wherein an axial length (19) of the second threaded portion (12) is at least equal to 25% of an axial length (20) of the thread (6).

10. Tubular component according to one of the preceding claims, wherein the second threaded portion (12) develops over a radial thickness of between 25% and 75% of a radial thickness over which the thread (6) develops.

11. Tubular component according to one of the preceding claims, wherein the main body (2) of the tubular component (1) comprises an inner coating (27), said inner coating (27) being made of corrosion-resistant material.
